**Europäisches Patentamt**

**European Patent Office**

**Office européen des brevets**

(19)

(11) Veröffentlichungsnummer: **0 166 070**
**B1**

# EUROPÄISCHE PATENTSCHRIFT

(12)

(45) Veröffentlichungstag der Patentschrift:
**04.11.87**

(51) Int. Cl.⁴: **B 29 C 47/00,** E 04 C 2/26

(21) Anmeldenummer: **85100161.0**

(22) Anmeldetag: **09.01.85**

(54) **Verfahren und Vorrichtung zur Herstellung von Kunststoffprofilteilen für Wandverkleidungen.**

(30) Priorität: **10.01.84 DE 3400549**

(43) Veröffentlichungstag der Anmeldung:
**02.01.86 Patentblatt 86/1**

(45) Bekanntmachung des Hinweises auf die Patenterteilung:
**04.11.87 Patentblatt 87/45**

(84) Benannte Vertragsstaaten:
**AT BE CH FR GB IT LI LU NL SE**

(56) Entgegenhaltungen:
**CH-A-267 338**
**GB-A-1 186 211**
**US-A-3 613 159**

(73) Patentinhaber: **W. Döllken & Co GmbH,**
**Ruhrtalstrasse 71, D-4300 Essen 16 (DE)**

(72) Erfinder: **Eschbach, Mathias, Illänderhöhe 22,**
**D-4300 Essen 16 (DE)**

(74) Vertreter: **Andrejewski, Walter, Patentanwälte**
**Dipl.- Phys. Dr. Walter Andrejewski Dipl.- Ing.**
**Dr.- Ing. Manfred Honke Dipl.- Phys. Dr. Karl**
**Gerhard Masch Theaterplatz 3, Postfach 10 02**
**54, D-4300 Essen 1 (DE)**

EP 0 166 070 B1

## Beschreibung

Die Erfindung bezieht sich gattungsgemäß auf ein Verfahren zur Herstellung von Profilabschnitten für Wand- und Fassadenverkleidungen aus thermoplastischem Kunststoff, wobei ein kontinuierlicher Profilstrang extrudiert und dessen Oberfläche fortlaufend unter Anwendung von Wärme und Druck mit einer Beschichtung versehen wird, wobei fernerhin der beschichtete Profilstrang gekühlt und abgezogen sowie danach in Profilstrangabschnitte aufgeteilt wird. Die Erfindung bezieht sich fernerhin auf eine Vorrichtung zur Durchführung eines solchen Verfahrens.

Im Rahmen der bekannten gattungsgemäßen Maßnahmen (GB-PS-11 86 211) besteht die Beschichtung aus einem dünnen Verstärkungsstreifen aus besonderem Kunststoff. Die Beschichtung wird auf den heißen Profilstrang aufgedrückt. Es entsteht ein Laminat. Die aus dem Laminat hergestellten Profilstrangabschnitte können für die verschiedensten Zwecke eingesetzt werden. Die Verwendung für Wand- oder Fassadenverkleidungen ist nicht ausgeschlossen. Wand- oder Fassadenverkleidungen, die eine steinartige Oberfläche, d. h. eine Oberfläche mit nicht hergestellt werden. Verkleidungsplatten für Fassaden und Wände mit steinartiger Oberfläche hat man bisher dadurch hergestellt, daß man das Steingranulat in eine Form eingelegt und durch Aufrütteln von Beton in diesen eingebettet hat. Dabei kann es sich um Beton mit hydraulischen Bindern oder auch um Beton mit anderen Bindern handeln (CH-PS-267 338).

Der Erfindung liegt die Aufgabe zugrunde, das gattungsgemäße Verfahren so zu führen, daß die Profilstrangabschnitte als ebene Verkleidungsplatten mit steinartiger Oberfläche einsetzbar sind.

Zur Lösung dieser Aufgabe lehrt die Erfindung, daß ein Steingranulat erwärmt sowie in erwärmtem Zustand auf die Oberfläche aufgebracht und das Steingranulat mittels Preßwalzen in den Profilstrang eingepreßt oder auf diesen aufgepreßt wird, wobei durch Materialverdrängung ein Verzug entsteht und daß dem Verzug durch eine Kalibrierung entgegengewirkt wird. Das Steingranulat kann dabei auf den bereits erhärteten Profilstrang aufgebracht werden, es besteht aber auch die Möglichkeit, das Steingranulat auf den noch nicht vollständig erhärteten Profilstrang aufzubringen. Um dem Verzug entgegenzuwirken, bestehen verschiedene Möglichkeiten. Ein Vorschlag der Erfindung ist dadurch gekennzeichnet, daß dem Verzug durch eine Kalibrierung mit in Laufrichtung aus der Waagerechten abgewinkelter Aufwärtsführung entgegengewirkt wird. Es besteht aber auch die Möglichkeit, dem Verzug durch eine Kalibrierung mit nach oben, d. h. zur Steingranulatseite hin, konkaver Verformung entgegenzuwirken. Im übrigen können beide Maßnahmen kombiniert werden.

Drückt man in einen extrudierten Profilstrang aus thermoplastischem Kunststoff, mag er vollständig erkaltet oder noch warm sein, Steingranulat dicht an dicht ein, so treten erhebliche Verformungen auf, die den Profilstrang zur Steingranulatseite hin konvex und im übrigen, in Längsrichtung betrachtet, auch zu dieser Seite hin krümmen. Überraschenderweise kann nach der Lehre der Erfindung das Einbringen des Steingranulates durch Einwalzen erfolgen. Zwar bewirkt dieses durch Materialverdrängung einen Verzug, der einerseits quer zur Durchlaufrichtung eine nach oben konvexe Verwölbung und andererseits eine entsprechende Krümmung bewirkt, diese Verformung kann jedoch durch die beschriebenen Kalibrierungsmaßnahmen kompensiert werden. Von besonderem Vorteil ist die Tatsache, daß zur Durchführung des Verfahrens mit einer einfachen Vorrichtung gearbeitet werden kann. Dazu gehören im grundsätzlichen Aufbau ein Extruder, eine Kalibrier-und Kühleinrichtung sowie eine Abzugseinrichtung, wobei eine Beschichtungseinrichtung angeordnet ist, die Preßwalzen aufweist (GB-PS-11 86 211). Die erfindungsgemäße Vorrichtung ist dadurch gekennzeichnet, daß die Beschichtungseinrichtung aus einer Dosierrinne für das Steingranulat besteht, die entlang des Förderweges mit einer Beheizungseinrichtung versehen ist und die über dem Profilstrang vor den Preßwalzen endet, und daß die Kalibrier- und Kühleinrichtung in Abzugsrichtung hinter der Abwurfrinne angeordnet ist. Die Abwurfrinne kann einen zum Kunststoffprofilstrang hin konkaven Boden aufweisen, um sicherzustellen, daß sich das Steingranulat über die Breite des Profilstranges gleichmäßig verteilt.

Im folgenden wird die Erfindung anhand einer lediglich ein Ausführungsbeispiel darstellenden Zeichnung ausführlicher erläutert. Es zeigen in schematischer Darstellung

Fig. 1 die erfindungsgemäße Vorrichtung in schematischer Seitenansicht,

Fig. 2 in vergrößertem Maßstab einen Schnitt A-A durch den Gegenstand nach Fig. 1 und

Fig. 3 in vergrößertem Maßstab einen Schnitt B-B durch den Gegenstand nach Fig. 1.

Die erfindungsgemäße Vorrichtung besteht aus dem Extruder 1 zur Herstellung eines Profilstranges 2, einer von dem Profilstrang 2 durchlaufenden Auftragseinrichtung 3 sowie einer Abzugseinrichtung 4.

Die Auftragseinrichtung 3 weist eine Dosierrinne 5 auf, an deren Aufgabeende 6 sich ein Trichter 7 zum Einfüllen des Steingranulats befindet. Das Abgabeende 8 der Dosierrinne 5 ist im Ausführungsbeispiel in Durchlaufrichtung des Profilstranges 2 dicht hinter dem Extruder 1 angeordnet. Entlang der Dosierrinne 5 ist eine Beheizungseinrichtung 9, beispielsweise in Form von Infrarot-Strahlern, vorgesehen. Mittels der Beheizungseinrichtung 9 findet eine Aufheizung des in der Dosierrinne 5 befindlichen Steingranulats statt. Zur Auftragseinrichtung 3 gehört außer der Dosierrinne 5 auch noch eine Abwurfrinne 10. Ferner sind parallel mit Abstand zueinander angeordnete Winkelprofile als Führung für den Profilstrang 2 vorgesehen.

Im Bereich der Führung 11 sind mehrere Preßwalzen 12 angeordnet, die vom Profilstrang 2 durchlaufen werden. Mittels der Preßwalzen 12 wird das aufgeheizte Steingranulat in die noch nicht verfestigte Oberfläche des Profilstranges 2 eingepreßt bzw. aufgepreßt.

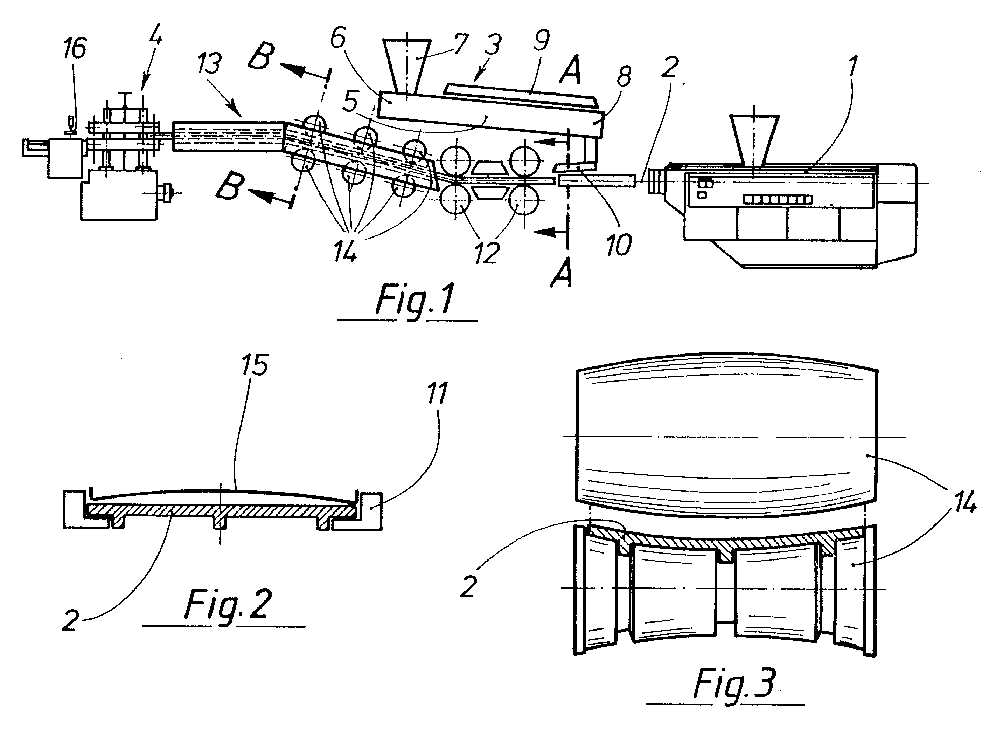

Den Preßwalzen 12 ist eine Kalibrier- und Kühleinrichtung 13 nachgeordnet, welche im Ausführungsbeispiel drei paarweise angeordnete Kalibrierwalzen 14 kleineren Durchmessers aufweist. Diese bewirken eine Ausformung des Profilstranges 2, wie insbesondere aus der Fig. 3 ersichtlich ist.

Eine gezielte Verteilung des Steingranulats zu den Seitenrändern des Profilstranges 2 wird durch die Ausbildung der Dosierrinne 5 nach Fig. 2 dadurch erreicht, daß der Boden 15 der Dosierrinne 5 zum Steuern der Schichtdicke des Steingranulats, z. B. zum Profilstrang 2 hin, eine aufwärts gerichtete Wölbung besitzt.

Im Bereich der Führung 11 ist im Ausführungsbeispiel nach den Preßwalzen 12 die Kalibrier- und Kühleinrichtung vorgesehen. Die Kalibrier- und Kühleinrichtung 13 dient dazu, einem Verzug des Profilstranges 2 infolge der Materialverdrängung durch die Einwirkung der Preßwalzen 12 entgegenzuwirken. Bei der dargestellten Ausführungsform verläuft die Kalibrierstrecke aufwärts gerichtet, um einem Verzug in Längsrichtung entgegenzuwirken.

In Fig. 3 sind zwei zugeordnete Kalibrierwalzen 14 gezeigt, wobei die Kalibrierwalzen 14 eine entsprechende Wölbung aufweisen, um einem Verzug in Querrichtung entgegenzuwirken. Die obere Walze ist der Oberseite des Profilstranges angepaßt, während die untere Walze der Profilierung der Unterseite des Profilstranges 2 entspricht.

Nach Durchlaufen der Abzugseinrichtung 4 wird der Profilstrang 2 mittels einer Schneideinrichtung 16 in Profilstrangabschnitte abgeteilt, so daß Verkleidungselemente der gewünschten Länge entstehen.

## Patentansprüche

1. Verfahren zur Herstellung von Profilabschnitten für Wand- und Fassadenverkleidungen aus thermoplastischem Kunststoff, - wobei
ein kontinuierlicher Profilstrang (2) extrudiert und dessen Oberfläche fortlaufend unter Anwendung von Wärme und Druck mit einer Beschichtung versehen wird,
wobei fernerhin der beschichtete Profilstrang gekühlt und abgezogen sowie danach in Profilstrangabschnitte aufgeteilt wird, dadurch gekennzeichnet, daß ein Steingranulat erwärmt sowie in erwärmtem Zustand auf die Oberfläche aufgebracht und das Steingranulat mittels Preßwalzen (12) in den Profilstrang (2) eingepreßt oder auf diesen aufgepreßt wird, wobei durch Materialverdrängung ein Verzug entsteht, und daß dem Verzug durch eine Kalibrierung (13) entgegengewirkt wird.

2. Verfahren nach Anspruch 1, dadurch gekennzeichnet, daß das Steingranulat auf den erhärteten Profilstrang (2) aufgebracht wird.

3. Verfahren nach Anspruch 1, dadurch gekennzeichnet, daß das Steingranulat auf den noch nicht vollständig erhärteten Profilstrang (2) aufgebracht wird.

4. Verfahren nach einem der Ansprüche 1 bis 3, dadurch gekennzeichnet, daß dem Verzug durch eine Kalibrierung mit in Laufrichtung aus der Waagerechten abgewinkelten Aufwärtsführung entgegengewirkt wird.

5. Verfahren nach einem der Ansprüche 1 bis 4, dadurch gekennzeichnet, daß dem Verzug durch eine Kalibrierung mit nach oben (d. h. zur Steingranulatseite hin) konkaver Verformung entgegengewirkt wird.

6. Vorrichtung zur Durchführung des Verfahrens nach einem der Ansprüche 1 bis 5, - mit
Extruder (1),
Kalibrier- und Kühleinrichtung (13), sowie Abzugseinrichtung (4),
wobei eine Beschichtungseinrichtung (3) angeordnet ist, die Preßwalzen (12) aufweist, dadurch gekennzeichnet, daß die Beschichtungseinrichtung (3) aus einer Dosierrinne (5) für das Steingranulat besteht, die entlang des Förderweges mit einer Beheizungseinrichtung (9) versehen ist, und die über dem Profilstrang (2) vor den Preßwalzen (12) endet, und daß die Kalibrier- und Kühleinrichtung (13) in Abzugseinrichtung hinter der Abwurfrinne (10) angeordnet ist.

7. Vorrichtung nach Anspruch 6, dadurch gekennzeichnet, daß die Dosierrinne (5) einen zum Profilstrang (2) hin konkaven Boden (15) aufweist.

## Claims

1. A process for the manufacture of profile sections for wall and facade claddings from thermoplastic synthetic material, - in which
a continuous profile strand (2) is extruded and its surface is continuously provided with a coating under the application of heat and pressure
in which furthermore the coated profile strand is cooled, hauled off, and subsequently cut up into profile strand lengths, characterized in that granulated stone is heated, applied to the surface in the heated condition and pressed into or onto the profile strand (2) by means of pressure rolls (12), whereby distortion arises from the displacement of material, and that the distortion is counteracted by a passage through correction rolls (13).

2. A process according to Claim 1, characterized in that the granulated stone is applied to the hardened profile strand (2).

3. A process according to Claim 1, characterized in that the granulated stone is applied to the not yet fully-hardened profile strand (2).

4. A process according to one of Claims 1 to 3, characterized in that the distortion is counteracted by a passage through correction rolls with conveyance upwards at an angle inclined to the horizontal.

5. A process according to one of Claims 1 to 4, characterized in that the distortion is counteracted by a passage through correction rolls with upwardly concave deformation (i.e. towards the granulated stone side).

6. Apparatus for performing the process according to one of Claims 1 to 5, - with
an extruder (1),
a correction and cooling equipment (13), and
a haul-off equipment (4),
in which is located a coating equipment (3) that possesses pressure rolls (12), characterized in that the coating equipment (3) consists of a dosage trough (5) for the granulated stone, that is provided with a heating equipment (9) along its conveyance path and ends above the profile strand (2) before the pressure rolls (12), and that the correction and cooling equipment (13) is located in the haul-off equipment after the scattering trough (10).

7. Apparatus according to Claim 6, characterized in that the dosage trough (5) possesses a base (15) that is concave relatively to the profile strand (2).

**Revendications**

1. Proccédé pour fabriquer des sections de profilés pour des habillages en matière thermoplastique de murs et de façades, selon lequel on forme par extrusion une barre profilée continue (2) et on applique de façon continue un revêtement sur sa surface moyennant l'application d'une chaleur et d'une pression, et selon lequel en outre on refroidit et on étire la barre profilée recouverte et on la subdivise ensuite en sections, caractérisé en ce qu'on chauffe des granulés de pierre et on les applique à l'état chaud sur la surface et on enfonce ou on applique par compression les granulés de pierre, au moyen de cylindres de pressage (12), dans ou sur la barre profilée (2), auquel cas une déformation apparaît par suite du refoulement de matière, et qu'on s'oppose à la déformation en mettant en oeuvre un calibrage (13).

2. Procédé selon la revendication 1, caractérisé en ce qu'on applique des granulés de pierre sur la barre profilée durcie (2).

3. Procédé selon la revendication 1, caractérisé en ce qu'on applique des granulés de pierre sur la barre profilée (2) non encore complétement durcie.

4. Procédé selon l'une des revendications 1 à 3, caractérisé en ce qu'on s'oppose à la déformation au moyen d'un calibrage en utilisant un guidage ascendant qui est incliné, dans la direction de circulation, par rapport à l'horizontale.

5. Procédé selon l'une des revendications 1 à 4, caractérisé en ce qu'on s'oppose à la déformation au moyen d'un calibrage avec une déformation concave vers le haut (c'est-à-dire en direction du côté des granulés de pierre).

6. Dispositif pour la mise en oeuvre du procédé selon l'une des revendications 1 à 5, comportant
une extrudeuse (1),
un dispositif (13) de calibrage et de refroidissement, et
un dispositif de tirage (4),
et dans lequel il est prévu un dispositif d'application (3), qui comporte des cylindres de pressage (12), caractérisé en ce qque le dispositif d'application (3) est constitué par une gouttière de dosage (5) prévue pour les granulés de pierre et qui est équipée le long de la voie d'entraînement, d'un dispositif de chauffage (9), et se termine au-dessus de la barre profilée (2) en amont des cylindres de pressage (12), et que le dispositif de calibrage et de refroidissement (13) est disposé, dans le dispositif de tirage, en aval de la gouttière de sortie (10).

7. Dispositif selon la revendication 6, caractérisé en ce que la gouttière de dosage (5) comporte un fond (15), qui est concave en direction de la barre profilée (2).

Fig.1

Fig.2

Fig.3